## Europäisches Patentamt

## European Patent Office

## Office européen des brevets

(19)

(11) Veröffentlichungsnummer: **0 243 824**
**B1**

(12) **EUROPÄISCHE PATENTSCHRIFT**

(45) Veröffentlichungstag der Patentschrift:
11.07.90

(51) Int. Cl.⁵: **G21C 3/32**

(21) Anmeldenummer: **87105711.3**

(22) Anmeldetag: **16.04.87**

(54) **Kernreaktorbrennelement.**

(30) Priorität: **02.05.86 DE 3614910**

(43) Veröffentlichungstag der Anmeldung:
**04.11.87 Patentblatt 87/45**

(45) Bekanntmachung des Hinweises auf die Patenterteilung:
**11.07.90 Patentblatt 90/28**

(84) Benannte Vertragsstaaten:
**DE FR**

(56) Entgegenhaltungen:
EP-A- 0 054 827
FR-A- 1 246 458
GB-A- 1 598 330
US-A- 3 767 525

(73) Patentinhaber: **Siemens Aktiengesellschaft,
Wittelsbacherplatz 2, D-8000 München 2(DE)**

(72) Erfinder: **Rau, Peter, Dipl.-Ing. (FH), Mittelehrenbach 89,
D-8551 Leutenbach(DE)**
Erfinder: **Strobel, Reinhardt, Dipl.-Ing. (FH),
Berthold-Brecht-Strasse 74, D-8500 Nürnberg(DE)**
Erfinder: **Peehs, Martin, Dr. Dipl.-Phys., Falkenstrasse 3,
D-8526 Bubenreuth(DE)**
Erfinder: **Hünner, Manfred, Odenwaldallee 1,
D-8520 Erlangen(DE)**
Erfinder: **Schumann, Sönke, Dr., Klärkamp 8,
D-3301 Lagesbüttel(DE)**

## Beschreibung

Die Erfindung betrifft ein Kernreaktorbrennelement nach dem Oberbegriff des Patentanspruches 1.

Häufig ist ein solches Kernreaktorbrennelement für sogenannte Hochkonverterreaktoren mit Druckwasser z.B. entsprechend der DE-A 3 009 937 bestimmt. Die Abstandsrippen am Mantel der Brennstäbe bestimmen in diesem Kernreaktorbrennelement den Abstand zwischen benachbarten Stäben und sind bei besonders enger Anordnung der Stäbe günstiger als gitterförmige Abstandhalter, die mit Stegen zwischen die beiden Stäbe greifen. Wegen der fehlenden Gitterabstandhalter muß allerdings in der Regel der Querschnitt dieses Kernreaktorbrennelementes durch den ummantelnden Kasten geometrisch genau und nach abgeschlossener Montage des Kernreaktorbrennelementes stabil festgelegt sein. Ein solcher ummantelnder Kasten kann zwar aus einem Stück gefertigt sein. Je länger aber dieser ummantelnde Kasten und je größer sein Querschnitt ist, umso schwieriger ist es, bei seiner Fertigung die notwendigen Toleranzen einzuhalten.

Der Erfindung liegt die Aufgabe zugrunde, die Fertigung des Kernreaktorbrennelementes und insbesondere die Einhaltung von Toleranzen am ummantelnden Kasten des Kernreaktorbrennelementes zu erleichtern.

Zur Lösung dieser Aufgabe hat ein Kernreaktorbrennelement der eingangs erwähnten Art erfindungsgemäß die Merkmale des kennzeichnenden Teiles des Patentanspruches 1.

Vorteilhafte Weiterbildungen dieses Kernreaktorbrennelementes insbesondere hinsichtlich verbesserter Stabilität des ummantelnden Kastens und Reparaturfreundlichkeit des Kernreaktorbrennelementes sind Gegenstand der Unteransprüche.

Die Erfindung und ihre Vorteile seien anhand der Zeichnung an einem Ausführungsbeispiel näher erläutert:

Fig. 1 zeigt eine Seitenansicht eines erfindungsgemäßen Kernreaktorbrennelementes.

Fig. 2 zeigt einen Schnitt längs der strichpunktierten Linie II-II in Fig. 1.

Fig. 3 zeigt einen Schnitt längs der strichpunktierten Linie III-III in Fig. 1.

Fig. 4 zeigt einen Schnitt längs der strichpunktierten Linie IV-IV in Fig. 1.

Fig. 5 zeigt ein Detail V aus Fig. 3.

Fig. 6 und Fig. 7 zeigen in perspektivischer Ansicht Einzelteile des Kernreaktorbrennelementes nach den Fig. 1 bis 5.

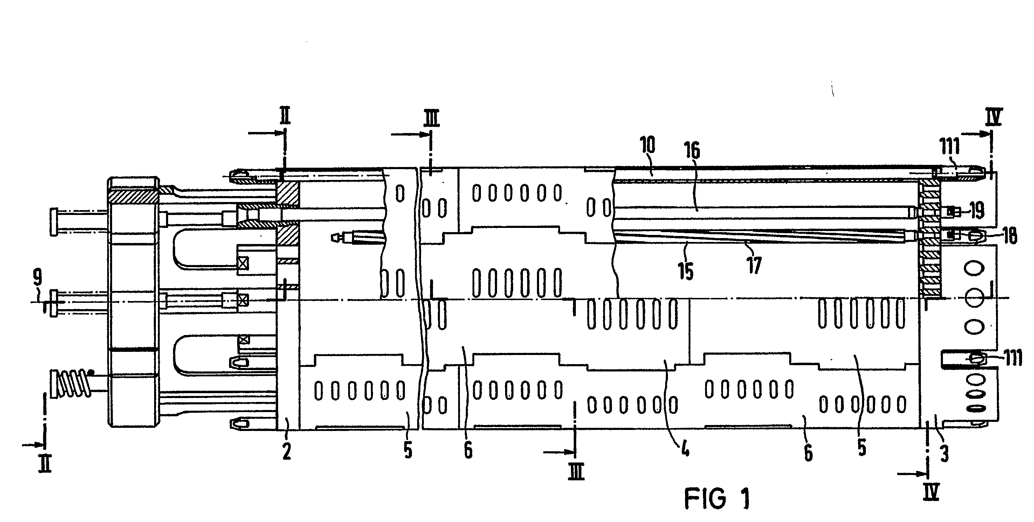

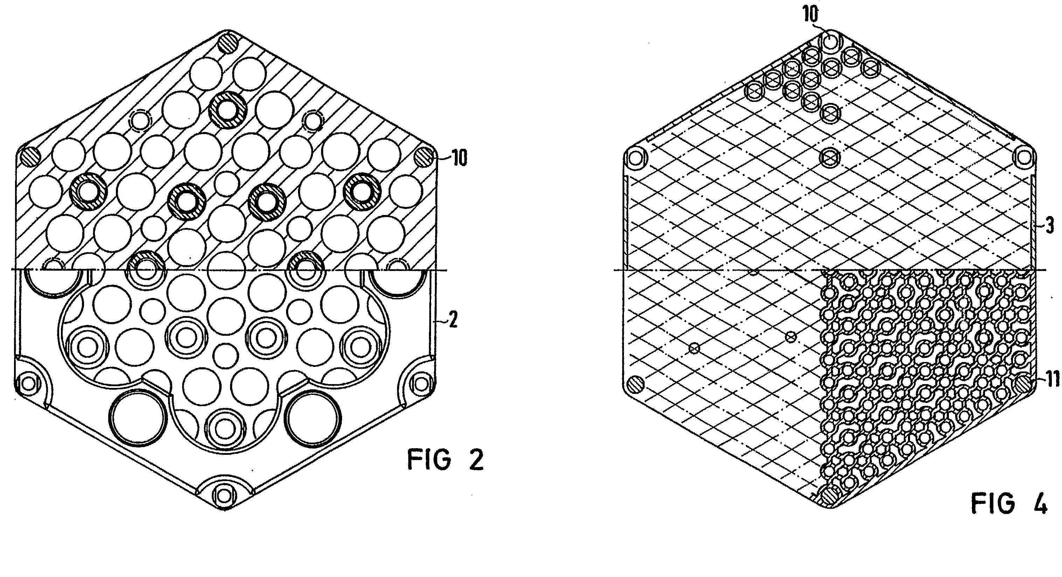

Das Kernreaktorbrennelement nach den Fig. 1 bis 5 hat ein Kopfteil 2 und ein Fußteil 3. Das Kopfteil 2 ist ohne Brennstäbe und Steuerstabführungsrohre in Fig. 2 zum Teil geschnitten in Draufsicht dargestellt, während ein Schnitt durch das Fußteil 3 in Fig. 4 zu erkennen ist. Der Querschnitt des Kopfteiles 2 und des Fußteiles 3 sind deckungsgleiche regelmäßige Sechsecke, die im Kernreaktorbrennelement miteinander fluchten.

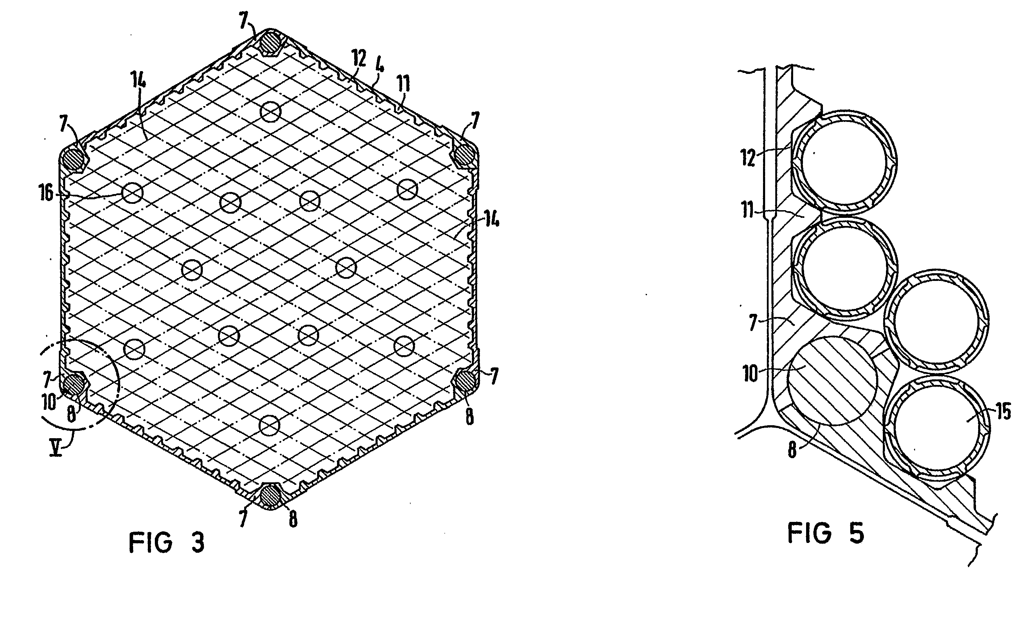

Zwischen dem Kopfteil 2 und dem Fußteil 3 weist das Kernreaktorbrennelement ferner einen ummantelnden Kasten 4 auf, dessen Querschnitt, wie Fig. 3 zeigt, ebenfalls ein regelmäßiges Sechseck ist, das zum Querschnitt von Kopfteil 2 und Fußteil 3 deckungsgleich ist und mit den Querschnitten von Kopfteil 2 und Fußteil 3 fluchtet.

Der ummantelnde Kasten 4 ist aus Platten 5 und 6 zusammengesetzt, die an den Ecken des den Querschnitt des ummantelnden Kastens 4 bildenden Sechsecks aneinander stoßen. Jede dieser aneinander stoßenden Platten 5 und 6 ist in Längsrichtung des ummantelnden Kastens 4 zu anderen Platten 6 und 5 versetzt, die ihr seitlich, d.h. im Kastenumfang benachbart sind.

Innerhalb des ummantelnden Kastens 4 ist an den Ecken des den Querschnitt dieses Kastens 4 darstellenden regelmäßigen Sechsecks jeweils ein in Längsrichtung des ummantelnden Kastens 4 verlaufender Stützwulst 7 ausgebildet. In jedem Stützwulst 7 befindet sich eine Durchführung 8, die parallel zur Richtung der Längsachse 9 des Kernreaktorbrennelementes im Mittelpunkt des den Querschnitt des ummantelnden Kastens 4 bildenden regelmäßigen Sechsecks ist. Durch jede dieser Durchführungen 8 greift eine Spannschraube als Zuganker 10, der mit einer Mutter 111 am Brennelementfuß 3 festgeschraubt ist. Diese Zuganker 10 spannen die Platten 5 und 6 sowie das Kopfteil 2 und das Fußteil 3 zusammen.

Wie die Fig. 3 und 5 bis 7 erkennen lassen, haben die Platten 5 und 6 und damit auch der ummantelnde Kasten 4 an der Innenseite langgestreckte Stütznoppen 11 die zueinander und zur Längsachse 9 des Kernreaktorbrennelementes parallel sind. Diese Stütznoppen 11 verjüngen sich in Richtung zum Inneren des Kastens 4 und haben als Querschnitt ein gleichschenkliges Trapez mit den Basiswinkeln gleich 60°. Zwischen zwei Stütznoppen 11 bzw. zwischen einer Stütznoppe 11 und einem Stützwulst 7 befinden sich entsprechende langgestreckte Vertiefungen 12, die zueinander und zur Längsachse 9 des Kernreaktorbrennelementes parallel sind.

Wie Fig. 3 und 4 erkennen lassen, sind in einer zur Längsachse 9 des Kernreaktorbrennelementes rechtwinkligen Ebene 2 Geradenscharen 13 und 14 gedacht, von denen die eine Geradenschar 13 parallel zu einer Seite des den Querschnitt des Kastens 4 bildenden regelmäßigen Sechsecks und die andere Geradenschar 14 parallel zu einer anderen, der erstgenannten Seite unmittelbar anschließenden Seite dieses Sechseckes ist. Jede Gerade 13 bzw. 14 beginnt und endet in der Mitte einer der Vertiefungen 12. Die Schnittpunkte der Geradenscharen 13 und 14 bestimmen die Positionen für Brennstäbe 15 und Steuerstabführungsrohre 16, die parallel zueinander und zur Längsachse 9 des Kernreaktorbrennelementes innerhalb des ummantelnden Kastens 4 in hexagonal dichtester Packung zusammengespannt sind. Jeder der Brennstäbe 15 weist außen an seinem Mantel wendelförmig in Längsrichtung verlaufende Abstandrippen 17 auf. Mit seinem Unterende greift jeder Brennstab 15 durch eine Durchführung im Fußteil 3 und ist dort mit einer Mutter 18 festgeschraubt. Jedes Steuerstabführungsrohr 16 greift am Oberende durch eine Durchführung im Brennelementkopf 2 und am Unterende durch eine Durchführung im Brennelementfuß 3, wo das betreffende Steuerstabführungsrohr ebenfalls mit einer Mutter 19 festgeschraubt ist.

An der Innenseite des ummantelnden Kastens 5 ist in jeder Vertiefung 12 ein Brennstab 15 angeordnet. Jeder Stützwulst 7 ragt in den Innenraum des ummantelnden Kastens 4 soweit vor, daß er etwa den Querschnitt eines Brennstabes 15 hat. Mit seiner abgerundeten Außenfläche bildet er eine Stützfläche für drei unmittelbar benachbarte Brennstäbe 15.

Die Stütznoppen 11 können, da sie an frei zugänglicher Oberfläche der Platten 5 und 6 sitzen, verhältnismäßig leicht z.B. durch spanabhebende Bearbeitung, durch Funkenerosion oder durch elektrolytische Abtragung ausgebildet werden.

Die Stütznoppen 11 können ferner so bemessen sein, daß der Querschnitt des Kühlmittelkanals, der jedem der Brennstäbe 15 an der Innenseite des ummantelnden Kastens 5 im Kernreaktorbrennelement zugeordnet ist, wenigstens annähernd gleich dem Querschnitt des Kühlmittelkanals ist, der jedem anderen Brennstab 15 zugeordnet ist. Dadurch wird in einem Kernreaktor eine unterschiedlich starke Kühlung der Brennstäbe 15 an der Innenseite des ummantelnden Kastens 5 gegenüber den anderen Brennstäben 15 vermieden, die zu thermischem Verziehen der Brennstäbe 15 an der Innenseite des ummantelnden Kastens 5 führen kann.

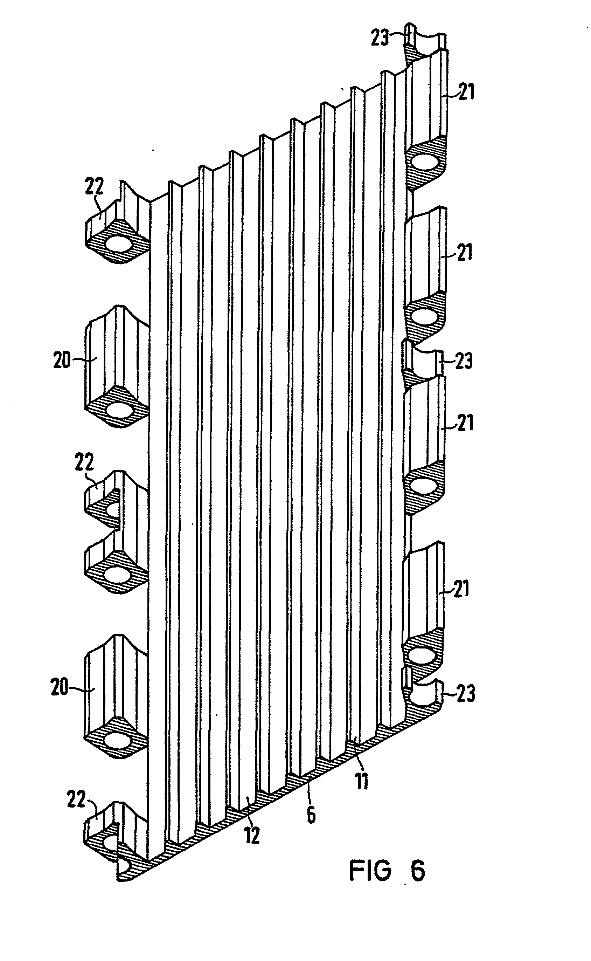

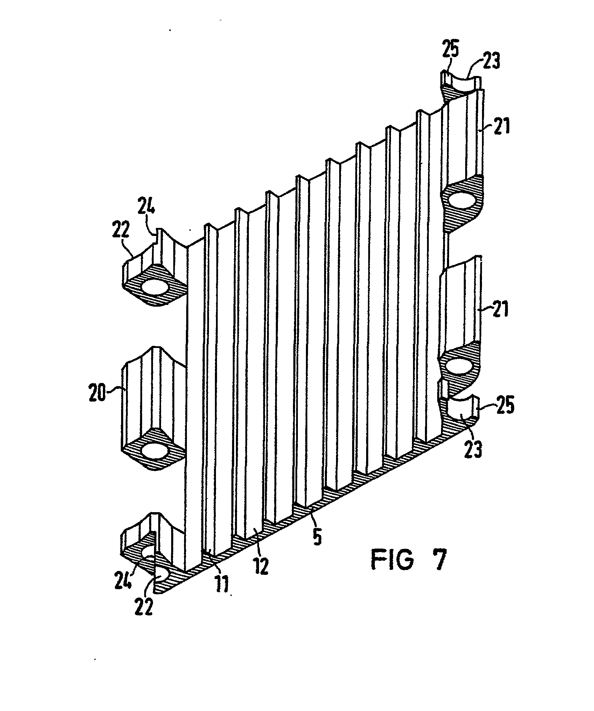

Die Stützwulste 7 sind, wie insbesondere die Fig. 6 und 7 erkennen lassen, durch Ansätze 20 und 21 gebildet, die sich an jeder Platte 5 bzw. 6 an den Längskanten befinden. Jeweils an zwei seitlich benachbarten Platten 5 und 6 befindliche Ansätze 20 und 21, die in Richtung der Längsachse 9 des ummantelnden Kastens 4 und damit des Kernreaktorbrennelementes versetzt zueinander sind, greifen scharnierartig ineinander und bilden jeweils eine durchgehende Durchführung 8 für einen der Zuganker 10.

Ferner sind Ansätze 22 und 23 an den Längskanten der Platten 6 und 5 vorgesehen. An zwei seitlich benachbarten Platten 5 und 6 liegen zwei Ansätze 22 und 23 aneinander an. Sie sind so Bestandteil des dort befindlichen Stützwulstes 7 und bilden ebenfalls an ihren Anlageflächen 24 und 25 die Durchführung 8 mit für den dort befindlichen Zuganker 10. Dadurch ist der mit den Zugankern 10 zusammengespannte ummantelnde Kasten 4 besonders stabil.

Die Anlageflächen 24 und 25 der Ansätze 22 und 23 befinden sich günstigerweise mit der Längsachse 9 des ummantelnden Kastens 4 und damit des Kernreaktorbrennelementes im Mittelpunkt des den Querschnitt des Kastens 4 bildenden regelmäßigen Sechsecks in der gleichen Ebene, so daß eine Platte 5 bzw. 6 nach Lösen der ihre Ansätze 20, 22 und 21, 23 durchgreifenden beiden Zuganker 10 und Entfernen dieser Zuganker 10 aus dem ummantelnden Kasten 4 herausgenommen werden können. Die im ummantelnden Kasten 4 befindlichen Brennstäbe 15 erhalten dadurch so viel seitliche Toleranz, daß nach Lösen der Muttern 18 und 19 der Brennelementfuß 3 entfernt und ein schadhafter Brennstab 15 aus dem ummantelnden Kasten 4 in Richtung der Längsachse 9 des Kernreaktorbrennelementes herausgezogen und durch einen frischen Brennstab 15 oder auch durch einen Simulationsstab, der keinen Kernbrennstoff enthält, ersetzt werden kann.

## Patentansprüche

1. Kernreaktorbrennelement mit Brennstäben, die außen am Mantel in Längsrichtung verlaufende Abstandrippen aufweisen und die nebeneinander mit zueinander parallelen Längsachsen von einem sie ummantelnden Kasten, dessen Querschnitt ein regelmäßiges Vieleck ist, dicht gepackt zusammengehalten sind, **dadurch gekennzeichnet,** daß innerhalb des Kastens (4) an den Ecken dieses regelmäßigen Vielecks jeweils ein in Richtung der Längsachse (9) des Kastens (4) verlaufender Stützwulst (7) mit einer Durchführung (8) ausgebildet ist, daß der Kasten (4) aus Platten (5,6) zusammengesetzt ist, die an den Ecken des regelmäßigen Vieleckes aneinander stoßen und von denen jede in Richtung der Längsachse (9) des Kastens (4) zu anderen Platten (6,5) versetzt ist, die ihr seitlich, d.h. im Kastenumfang benachbart sind, und daß die Platten (5,6) durch in der Durchführung (8) parallel zur Längsachse der Brennstäbe (15) und zur Längsachse (9) des Kastens (4) geführte Zuganker (10) zusammengespannt sind.

2. Kernreaktorbrennelement nach Anspruch 1, **dadurch gekennzeichnet,** daß Bestandteil eines Stützwulstes (7) Ansätze (20, 21) sind, die sich an jeweils zwei seitlich benachbarten Platten (5,6) in Richtung der Längsachse (9) des Kastens (4) versetzt zueinander befinden.

3. Kernreaktorbrennelement nach Anspruch 1, **dadurch gekennzeichnet,** daß Bestandteil eines Stützwulstes (7) zwei aneinander anliegende Ansätze (22) und (23) sind, von denen sich jeder an einer anderen von zwei seitlich benachbarten Platten (5) und (6) befindet und die an den Anlageflächen (24) und (25) gemeinsam eine Durchführung in Richtung der Längsachse (9) des Kastens (4) für einen der Zuganker (10) bilden.

4. Kernreaktorbrennelement nach Anspruch 3, **dadurch gekennzeichnet,** daß die beiden Ansätze (22) und (23) mit Anlageflächen (24) und (25) aneinander liegen, die sich mit der Längsachse (9) des ummantelnden Kastens (4) im Mittelpunkt des den Querschnitt dieses Kastens (4) bildenden regelmäßigen Vielecks einer Ebene befinden.

5. Kernreaktorbrennelement nach Anspruch 1, **dadurch gekennzeichnet,** daß der Querschnitt des ummantelnden Kastens (4) ein regelmäßiges Sechseck ist.

## Claims

1. Nuclear reactor fuel element with fuel rods having, on the outside of the casing, spacer ribs extending in the longitudinal direction which are held closely packed together with parallel longitudinal axes by a box surrounding them, the cross-section of which is a regular polygon, characterised in that inside the box (4) there is formed at the edges of this regular polygon a support rim (7), with a through aperture (8), extending in the direction of the longitudinal axis (9) of the box (4), in that the box (4) is composed of plates (5, 6) which abut at the corners of the regular polygon and each of which is offset in the direction of the longitudinal axis (9) of the box (4) with respect to other plates (6, 5) which are adjacent to it laterally, i.e. in the box periphery, and in that the plates (5, 6) are clamped together by tie rods (10) guided in the through aperture (8) parallel to the longitudinal axis of the fuel rods (15) and to the longitudinal axis (9) of the box (4).

2. Nuclear reactor fuel element according to claim 1, characterised in that projections (20) are a component of a support rim (7) and are offset with respect to each other on respectively two laterally adjacent plates (5, 6) in the direction of the longitudinal axis (9) of the box (4).

3. Nuclear reactor fuel element according to claim 1, characterised in that two abutting projections (22) and (23) are a component of a support rim (7), each of which is on another of two laterally adjacent plates (5) and (6) and which form on the contact surfaces (24) and (25) a common passage in the direction of the longitudinal axis (9) of the box (4) for one of the tie rods (10).

4. Nuclear reactor fuel element according to claim 3, characterised in that the two projections (22) and (23) abut each other with contact surfaces (24) and (25) which are in a plane with the longitudinal axis (9) of the surrounding box (4) in the centre point of the regular polygon forming the cross section of this box (4).

5. Nuclear reactor fuel element according to claim 1, characterised in that the cross section of the surrounding box (4) is a regular hexagon.

**Revendications**

1. Assemblage combustible de réacteur nucléaire, comprenant des aiguilles combustibles qui comportent à l'extérieur, sur leur face latérale, des nervures d'entretoisement s'étendant dans la direction longitudinale et qui sont maintenues ensemble en étant étroitement serrées les unes contre les autres, en ayant leurs axes longitudinaux parallèles, par un boîtier qui les enveloppant et dont la section transversale est un polygone régulier, caractérisé, en ce qu'à l'intérieur du boîtier (4) sont constitués, aux sommets de ce polygone régulier, des bourrelets d'appui (7), qui s'étendent dans la direction de l'axe longitudinal (9) du boîtier (4) et qui sont munis d'un passage (8), en ce que le boîtier est composé de plaques (5, 6), qui se touchent aux sommets du polygone régulier et dont chacune est décalée dans la direction de l'axe longitudinal (9) du boîtier (4) par rapport à d'autres plaques (6, 5) qui en sont voisines latéralement, c'est-à-dire sur le pourtour du boîtier, et en ce que les plaques (5, 6) sont maintenues ensemble par des tirants (10) guidés dans le passage (8) parallèlement aux axes longitudinaux des aiguilles combustibles (15) et à l'axe longitudinal (9) du boîtier (4).

2. Assemblage combustible de réacteur nucléaire suivant la revendication 1, caractérisé, en ce que font partie d'un bourrelet d'appui (7) des parties saillantes (20, 21) qui, sur deux plaques (5 et 6) latéralement voisines, sont décalées dans la direction de l'axe longitudinal (9) du boîtier (4).

3. Assemblage combustible de réacteur nucléaire suivant la revendication 1, caractérisé, en ce que font partie d'un bourrelet d'appui (7) deux parties saillantes (22 et 23) appliquées l'une contre l'autre, dont chacune se trouve sur une autre de deux plaques (5 et 6) voisines latéralement, et qui forment en commun sur les surfaces de contact (24 et 25) un passage dans la direction de l'axe longitudinal (9) du boîtier (4) pour l'un des tirants (10).

4. Assemblage combustible de réacteur nucléaire suivant la revendication 3, caractérisé, en ce que les deux parties saillantes (22 et 23) sont en contact l'une avec l'autre par des surfaces de contact (24 et 25), qui se trouvent avec l'axe longitudinal (9) du boîtier enveloppant (4), au centre du polygone régulier d'un plan, qui forme la section transversale de ce boîtier (4).

5. Assemblage combustible de réacteur nucléaire suivant la revendication 1, caractérisé, en ce que la section transversale du boîtier enveloppant (4) est un hexagone régulier.

FIG 1

EP 0 243 824 B1

FIG 4

FIG 2

FIG 5

FIG 3

FIG 6

FIG 7